# FASCICULE DE BREVET EUROPEEN

(11) **EP 2 393 651 B1**
(45) Date de publication et mention de la délivrance du brevet: **24.10.2012**
(21) Numéro de dépôt: 10702518.1
(22) Date de dépôt: 08.01.2010
(51) Int. Cl.: B32B 3/12, B32B 3/18, B64C 1/40, G10K 11/172

(54) **PROCÉDÉ DE FABRICATION D'UNE STRUCTURE A ÂMES ALVÉOLAIRES POUR UNE NACELLE DE TURBORÉACTEUR**
VERFAHREN ZUR HERSTELLUNG EINER STRUKTUR MIT ZELLENFÖRMIGEN KERNEN FÜR EINE STRAHLTRIEBWERKSGONDEL
METHOD FOR MANUFACTURING A STRUCTURE WITH CELLULAR CORES FOR A TURBOJET NACELLE

(30) Priorité: 05.02.2009 FR 0900500
(43) Date de publication de la demande: 14.12.2011
(73) Titulaire: Aircelle, 76700 Gonfreville l'Orcher (FR)
(72) Inventeur: DESJOYAUX, Bertrand, F-76310 Sainte Adresse (FR); DESCHAMPS, Thierry, F-76280 Heuqueville (FR); MOUTIER, John, F-76620 Le Havre (FR)
(74) Mandataire: Gaillarde, Frédéric F. Ch.
(86) Numéro de dépôt international: PCT/FR2010/000019
(87) Numéro de publication internationale: WO 2010/089471

(56) Documents cités:
- EP-A- 1 889 713
- WO-A-2008/113904
- DATABASE WPI Week 200308 Thomson Scientific, London, GB; AN 2003-078579 XP002540688 & JP 2002 191982 A (NIPPON STEEL CORP) 10 juillet 2002 (2002-07-10)

## Description

La présente invention concerne un procédé de fabrication d'une structure à âmes alvéolaires apte à être utilisée dans un panneau structurant pour une nacelle de turboréacteur.

L'invention concerne également un panneau et une nacelle comportant une telle structure à âmes alvéolaires.

Les turboréacteurs d'avion sont entourés d'une nacelle visant à les protéger et à assurer le fonctionnment de ces derniers. La nacelle est formée de parois consituées de panneaux non structurants et de panneaux structurants. Ces derniers assurent une rigidité suffisante à la nacelle. Pour cela, les panneaux structurants comportent habituellement une ou plusieurs couches de structures à âmes alvéolaires (structures couramment appelées « en nid d'abeille »). Ces couches sont généralement revêtues d'une peau sur leur face dite externe, c'est-à-dire la plus éloignée radialement de l'axe du moteur, et sur leur face interne, c'est-à-dire la plus proche radialement de l'axe du moteur.

Le panneau structurant est ensuite assemblé en disposant les différentes peaux et couches puis encollées sur un moule à la forme requise. L'ensemble subit une cuisson dans un four de manière à serrer les couches et polymériser les adhésifs.

Parallèlement, les turboréacteurs sont générateurs d'une pollution sonore importante. Il existe une forte demande visant à réduire cette pollution, et ce d'autant plus que les turboréacteurs utilisés deviennent de plus en plus puissants.

Pour ce faire, certains panneaux employés sont des panneaux structurants de type acoustique dont les couches sont généralement revêtues sur la face externe d'une peau imperméable à l'air, dite « pleine », et sur la face interne d'une peau perforée perméable à l'air, dite « acoustique ».

Le panneau structurant acoustique peut comprendre en outre plusieurs couches de structures à âmes alvéolaires entre lesquelles se situe une peau multiperforée dite « septum ». Cette peau est collée entre les structures à âmes alvéolaires par chauffage lors de la phase d'assemblage / collage du panneau.

De tels panneaux constituent des résonnateurs acoustiques aptes à « piéger » le bruit et donc à atténuer les émissions sonores en direction de l'extérieur de la nacelle.

D'une façon connue, une structure à âmes alvéolaires comprend au moins un bloc à âmes alvéolaires comprenant une partie centrale comportant des cellules alvéolaires de coeur et une pluralité de parties latérales comportant chacune une pluralité de cellules alvéolaires de jonction.

Les propriétés acoustiques du panneau structurant acoustique, c'est-à-dire son taux d'absorption du bruit en fonction de la fréquence et du niveau sonore dudit bruit, dépendent notamment de la jonction du ou des blocs à âme alvéolaire.

Le jointage des cellules alvéolaires de jonction est couramment réalisé à l'aide d'une colle moussante, telle que la colle FM410®, qui a une importante capacité d'expansion. Les bords adjacents du ou des bloc à âmes alvéolaires sont enduits de la colle qui, lors de son expansion, obstrue les cellules alvéolaires en créant des surépaisseurs.

L'utilisation de colle nécessite un temps de pose et de découpe des surépaisseurs trop important d'un point de vue industriel.

De plus, ces surépaisseurs présentent l'inconvénient de diminuer la surface acoustique efficace de la structure à âmes alvéolaires et aussi de provoquer des ruptures brutales d'impédances qui contribue à la diminution de la performance acoustique du panneau acoustique lors du fonctionnement du turboréacteur.

Il est également connu de la demande WO200811/3904 une structure à âmes alvéolaires dont les cellules alvéolaires de bord situées sur les bords de plusieurs blocs à âmes alvéolaires constituant ladite structure ont été sectionnées puis imbriquées les unes dans les autres pour joindre lesdits blocs entre eux.

Cependant, une telle structure à âmes alvéolaires nécessite un maintien par mise sous contrainte de la structure à âmes alvéolaires ce qui complexifie la fabrication.

En outre, ce mode de réalisiation ne permet pas d'obtenir une résistance optimale à la flexion.

Un but de la présente invention est donc de fournir une structure à âmes alévolaires simple à fabriquer et qui présente une bonne résistance à la flexion.

Un autre but de la présente invention est de fournir une structure à âmes alévolaires apte à absorber efficacement les bruits issus du turboréacteur dans un panneau acoustique.

A cet effet, selon un premier aspect, l'invention a pour objet un procédé de fabrication d'une structure à âmes alvéolaires apte à être utilisée dans un panneau structurant pour une nacelle de turboréacteur comprenant au moins un bloc à âmes alvéolaires comprenant une partie centrale comprenant des cellules alvéolaires de coeur et au moins deux parties latérales comportant chacune des cellules alvéolaires latérales, ce procédé étant caractérisé en ce qu'il comprend les étapes suivantes:
A) on forme des parois de jonction sur les cellules alvéolaires latérales, les parois de jonction étant aptes à coopérer pour former une zone de jonction, de jonction,
B) on déplie les parois de jonction ainsi formée, et
C) on joint bord-à-bord les parois ainsi dépliées appartenant à deux parties latérales différentes de sorte que lesdites parois de jonction s'imbriquent les unes dans les autres pour former une zone de jonction.

La jonction d'un ou de plusieurs blocs à âmes alvéolaires par imbrication de parois de jonction permet d'éviter de recourir à une mise sous contrainte de la structure obtenue par le procédé de l'invention. En effet, la jonction est réalisée par simple entrelacement desdites parois sans que ces dernières soient nécessairement en contact.

La résistance à le flexion est améliorée. En effet, les parois de jonction n'étant pas en majorité en contact les unes des autres, ces dernières peuvent chacune se déformer librement sans impacter les autres parois. En outre, les efforts transitent par les peaux externes d'une peau externe à une autre ce qui permet d'éviter la concentration des efforts dans l'axe de la jonction.

En outre, la structure à âmes alvéolaires obtenue par le procédé de la présente invention présente l'avantage de ne pas obstruer les cellules alvéolaires au niveau des jonctions des blocs à âmes alvéolaires. Par conséquent, la structure à âme alvéolaire absorbe très efficacement le bruit issu du fonctionnement du turboréacteur.

Selon d'autres caractéristiques de l'invention, le procédé de l'invention comporte l'une ou plusieurs des caractéristiques optionnelles suivantes considérées seules ou selon toutes les combinaisons possibles :
- la longueur (e) de chaque paroi de jonction présente une longueur supérieure ou égale à la plus grande longueur des cellules alvéolaires latérales et/ou de coeur ce qui permet d'améliorer la résistance en flexion ;
- on joint bord-à-bord des parties latérales appartenant à des blocs à âmes alvéolaires dont les cellules alvéolaires latérales et de coeur sont de tailles différentes ce qui permet d'adapter la résistance mécanique de la structure en fonction des besoins ;
- dans l'étape A, on ouvre des cellules alvéolaires de bord situées sur les bords d'une partie latérale d'un bloc destinés à être joints et des cellules alvéolaires adjacentes aux cellules alvéolaires de bord de sorte à former les parois de jonction ce qui permet une formation simple et efficace des parois de jonction ;
- on ouvre les cellules alvéolaires de bord et adjacentes par section d'un côté latéral et/ou d'une paroi d'une cellule alvéolaire ce qui permet d'obtenir une ouverture optimale des cellules alvéolaires ;
- le procédé de l'invention comprend une étape supplémentaire D dans laquelle on maintient l'imbrication réalisée à l'étape C au moyen d'organes de fixation, notamment de cavaliers ou d'agrafes, ce qui permet de maintenir durablement sans contrainte la structure à âmes alvéolaires.

Selon un deuxième aspect, l'invention a pour objet un panneau structurant pour une nacelle entourant un turboréacteur, caractérisé en ce qu'il est équipé d'au moins une structure à âmes alvéolaires obtenue par le procédé de l'invention.

De manière préférée, le panneau de l'invention est un panneau acoustique dont la ou les structures à âmes alvéolaires sont revêtues sur l'une de ses faces d'une peau externe imperméable à l'air et sur l'autre de ses faces d'une peau interne perforée ce qui permet de bénéficier des avantages de ladite structure dans un panneau structurant acoustique.

Selon une variante préférée, le panneau de l'invention comporte au moins deux structures à âmes alvéolaires superposées l'une sur l'autre ce qui permet de renforcer la rigidité mécanique du panneau de l'invention.

Selon un autre aspect, l'invention a pour objet une nacelle pour moteur d'aéronef, caractérisée en ce qu'elle comprend au moins un panneau selon l'invention.

De manière préférée, le ou les panneaux structurants son situés dans la zone d'entrée d'air de ladite nacelle.

L'invention sera davantage comprise à la lecture de la description non limitative qui va suivre, faite en référence aux figures ci-annexées.
- La figure 1 est une vue en coupe d'un panneau structurant monocouche selon la présente invention;
- La figure 2 est une vue en coupe d'un panneau structurant bicouche selon la présente invention;
- La figure 3 est une vue schématique du procédé de l'invention;
- La figure 4 est une vue du dessus d'une structure obtenue à l'issue du procédé de l'invention ;
- La figure 5 est une vue de face d'une cellule alvéolaire employée dans le cadre de la présente invention ;
- La figure 6 est une variante du mode de réalisation de la figure 3.

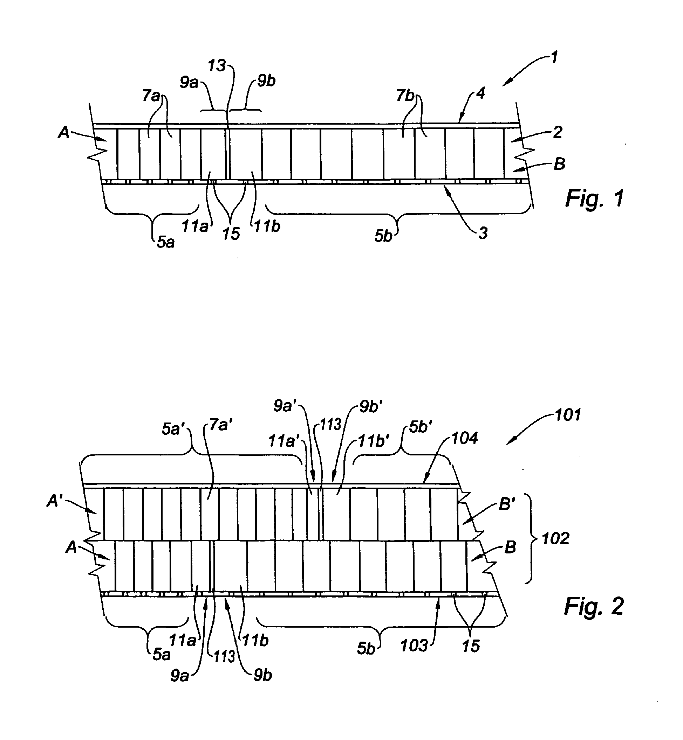

Comme représenté à la figure 1, le panneau structurant 1 selon l'invention peut être un panneau de type acoustique monocouche comprenant une structure à âmes alvéolaires 2 de l'invention formée d'un ou de plusieurs, et en l'espèce deux blocs à âmes alvéolaires A et B joints entre eux. Dans le cas où un seul bloc à âmes alvéolaires est employé, il est joint sur lui-même pour former une structure à âmes alvéolaires, par exemple en formant une structure sensiblement cylindrique apte à être utilisée dans une entrée d'air de nacelle.

Le ou les blocs A et B à âmes alvéolaires employés peuvent présenter toute forme géométrique, telle qu'une forme carrée, ou encore toute autre forme appropriée.

Dans le cas où la structure de l'invention 2 comporte une pluralité de blocs à âmes alvéolaires A, B définissant une pluralité de zones de jonction, il est alors possible de choisir chaque bloc pour obtenir la résistance mécanique voulue et également, le cas échéant, à l'absorption acoustique désirée.

La structure à âmes alvéolaires 2 est prise en sandwich entre une peau interne 3 et une peau externe 4 qui permettent la transition des efforts mécaniques. En outre, la présence de ces peaux 3 et 4 permet de maintenir la structure à âmes alvéolaires 2 en un seul élément.

Ces deux blocs à âmes alvéolaires A, B comportent une partie centrale 5 comprenant des cellules alvéolaires de coeur 7a, 7b et typiquement plusieurs, en l'espèce deux parties latérales 9a, 9b comprenant chacune une pluralité de cellules alvéolaires latérales 11 a, 11 b. Un bloc peut comporter par exemple au moins quatre parties latérales. Les cellules alvéolaires latérales11a, 11b de chaque bloc A et B sont adjacente à la zone de jonction 13 dont les caractéristiques seront détaillées ci-après.

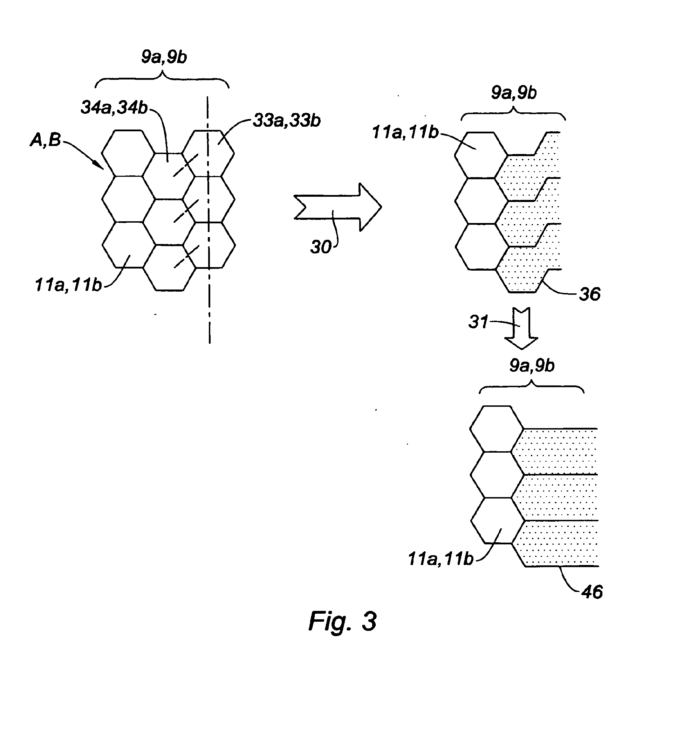

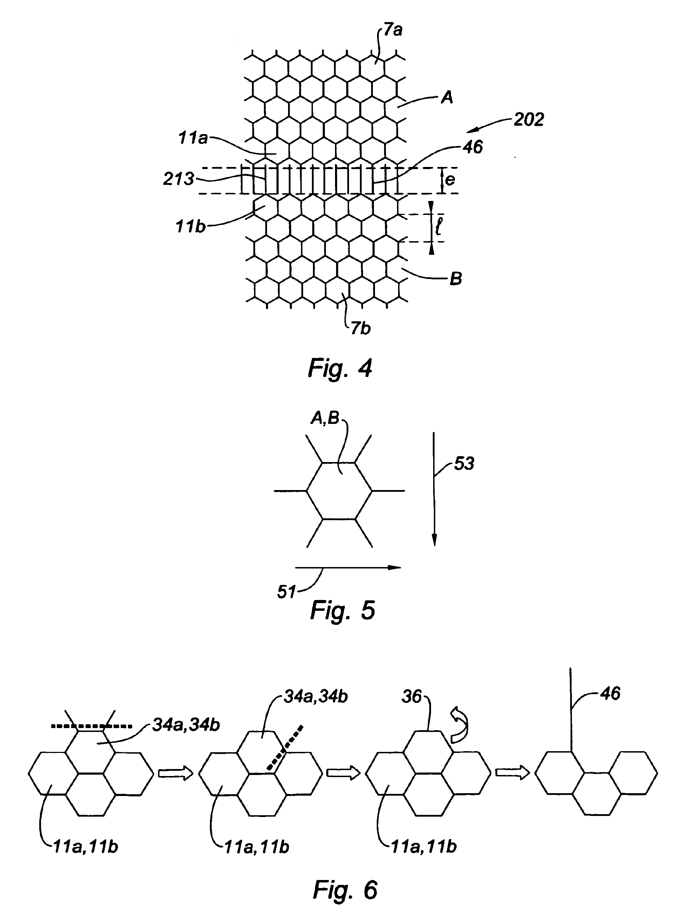

Comme cela est visible sur les figures 3 et 4, les cellules alvéolaires de coeur 7a, 7b et les cellules alvéolaires latérales 11a, 11b présentent en l'espèce des sections hexagonales, formant ainsi des structures dites « en nid d'abeille ». Il est possible que lesdites cellules alvéolaires 7a, 7b et 11a, 11b présentent des sections de toute forme géométrique autre qu'hexagonales.

Comme on peut le voir sur la figure 1, la section des cellules alvéolaires de coeur 7a et latérales 11a du bloc A peut être par exemple inférieure à celle des cellules alvéolaires de coeur 7b et latérales 11 b du bloc B, de manière à répondre à des contraintes acoustiques et/ou mécaniques imposées par le cahier des charges du constructeur.

De manière préférée, les cellules alvéolaires latérales 11 a, 11 b et de coeur 7a, 7b sont constituées de métal, d'un alliage ou d'un matériau composite afin de faciliter la fabrication des cellules alvéolaires de coeur 7a, 7b et latérales 11 a, 11 b et d'apporter une bonne résistance mécanique à ces dernières. Le matériau formant la peau interne 3 peut être réalisé dans un matériau métallique, tel que l'aluminium ou le titane, ou encore en tissu, et le matériau formant la peau externe 4 peut être un matériau composite multicouche ou un matériau métallique tel que l'aluminium ou le titane.

Le panneau structurant 1 tel que représenté à la figure 1 est un panneau acoustique. Dans ce cas, la peau interne 3 comporte des perforations 15 situées en vis-à-vis des cellules alvéolaires de coeur 7a, 7b et latérales 11a, 11 b. Ainsi, le panneau structurant 1 peut absorber les nuisances sonores engendrées par le fonctionnement du turboréacteur.

Dans une variante représenté à la figure 2, le panneau structurant 101 est un panneau bicouche selon l'invention comprenant deux couches de blocs à âmes alvéolaires, formées respectivement par des blocs A, B et A', B'. Lesdites couches étant assemblées entre elles par des moyens connus et prises en sandwich entre une peau interne 103 et une peau externe 104 analogues à celles de la figure 1. Les autres éléments formant le panneau structurant 101 sont identiques à ceux du panneau structurant 1 représenté à la figure 1, les références correspondantes étant les mêmes.

Selon une variante, il est possible d'obtenir un panneau structurant comportant un nombre de couches de blocs à âmes alvéolaires supérieur à 2, notamment supérieur ou égal à 3.

Dans ce panneau bicouche, les blocs à âmes alvéolaires A, B d'une part et A', et B' d'autre part sont joints entre eux dans une ou plusieurs zones de jonction 113.

Le principe de fonctionnement d'un panneau acoustique comme ceux 1 et 101 représentés aux figures 1 et 2 est connu en soi : le panneau 1, 101 est destiné à être monté dans la paroi interne d'une nacelle d'aéronef, de préférence dans la zone d'entrée d'air de ladite nacelle, de manière que la peau interne 3, 103 soit située en vis-à-vis du moteur qui se trouve dans cette nacelle.

Le bruit émis par ce moteur pénètre dans les cellules alvéolaires A, B par l'intermédiaire des orifices 15 situés dans la peau interne 3, 103 et vibre à l'intérieur de ces cellules alvéolaires de coeur 7a, 7b et latérales 11a, 11 b qui constituent alors des résonateurs acoustiques. Ainsi, une dissipation de l'énergie acoustique et une réduction consécutive du niveau de bruit sont permises. Afin d'améliorer l'absorption acoustique, il est possible d'appliquer une peau perforée, encore appelée septum, entre les deux couches de blocs à âmes alvéolaires A, B et A', B' du panneau structurant 101 afin que les cellules alvéolaires de coeur 7a', 7b' et latérales 11a', 11b' des blocs A' et B' constituent également des résonateurs acoustiques.

Selon le mode de réalisation représenté aux figures 3 et 4, la structure à âmes alvéolaires 202 utilisée dans le panneau structurant de l'invention est obtenue par le procédé de l'invention qui comporte une étape A, symbolisée par la flèche 30, une étape B, symbolisée par la flèche 31, et une étape C (non représenté).

Dans l'étape A, on forme des parois de jonction 36 sur les cellules alvéolaires latérales 11a et 11b, les parois de jonction 36 étant aptes à coopérer pour former une zone de jonction.

Pour cela, selon le mode de réalisation représenté à la figure 3, on ouvre les cellules alvéolaires de bord 33a, 33b situées sur les bords d'une partie latérale 9a, 9b d'un ou de plusieurs blocs A, B destinés à être joints et les cellules alvéolaires adjacentes 34a, 34b aux cellules alvéolaires de bord 33a, 33b de sorte à former les paroi de jonction 36. Ainsi, de manière avantageuse, on forme des parois de jonction 36 sur les cellules alvéolaires latérales 11a et 11 b, les parois de jonction 36 étant aptes à coopérer pour former une zone de jonction.

Dans ce mode de réalisation, on ouvre les cellules alvéolaires de bord 33a et 33b et adjacentes 34a et 34b par section d'un côté latéral et/ou d'une paroi d'une cellule alvéolaire par tout moyen connu de l'homme du métier. Ainsi, par exemple, on peut réaliser une découpe effectuée à l'aide d'un outil tranchant comme une paire de ciseaux.

Selon un autre mode de réalisation non représenté, on peut utiliser un bloc ou plusieurs blocs à âmes alvéolaires dont les parois de jonction sont formées lors de la fabrication dudit ou desdits blocs. Selon un autre mode de réalisation, les parois de jonction peuvent être rapportées par tout moyen connu de l'homme du métier sur un bloc à âmes alvéolaires déjà formé.

Dans l'étape B, on déplie les parois de jonction 36 ainsi formées par tout moyen connu de l'homme du métier, notamment par l'utilisation d'une pince. Le déploiement des parois de jonction 36 permet ainsi d'obtenir une longueur de la zone de jonction plus importante.

Comme représenté à la figure 4, dans l'étape C, on joint bord-à-bord les parois ainsi dépliées 46 appartenant à deux parties latérales différentes 9a et 9b de sorte que lesdites parois de jonction 46 s'imbriquent les unes dans les autres pour former une zone de jonction 213.

Ainsi de manière avantageuse, la structure à âmes alvéolaires obtenue par le procédé de la présente invention présente l'avantage de ne pas obstruer les cellules alvéolaires au niveau de la jonction des blocs à âmes alvéolaires. Par conséquent, la structure de l'invention absorbe de manière efficace le bruit issu du fonctionnement du turboréacteur.

Selon une variante, les parois de jonction 46 sont dépliées de sorte à les disposer de manière sensiblement parallèle les unes des autres de sorte que les parois de jonction 46 ainsi dépliées s'imbriquent les unes dans les autre à la manière d'un peigne.

La structure de l'invention 201 peut être formée par un unique bloc joint sur lui-même ou par la jonction d'une pluralité de bloc alvéolaire, notamment deux blocs A, B ou trois blocs alvéolaires.

Les parois de jonction 46 dépliées peuvent présenter de manière avantageuse une longueur e supérieure ou égale à la plus grande longueur I d'une cellule alvéolaire latérale ou de coeur de plus grande taille.

La plus grande longueur I est définie comme la distance la plus grande entre deux arêtes non immédiatement adjacentes de la cellule alvéolaire. Dans le cas de cellules alvéolaires régulières, cette plus grande longueur I correspond au diamètre du cercle inscrit ou circonscrit de la cellule alvéolaire de plus grande taille.

L'imbrication, lors de l'étape C peut être réalisée dans le sens « ruban » 51, correspondant à l'orientation du bloc A, B à âme alvéolaire avant expansion (voir figure 5). Le sens « d'expansion » 53 correspond à une direction perpendiculaire à la direction du sens ruban 51 (voir figure 5). Dans une variante, il est également possible de joindre un bloc dans le sens « ruban » et un autre bloc dans le sens « d'expansion ».

Le sens « expansion » désigne le sens dans lequel on ouvre les cellules alvéolaires de coeur 7a, 7a', 7b, 7b' et latérales 11a, 11a', 11b, 11b' de sorte à former des cellules ouvertes aptes à piéger le son et ainsi à former la structure en nid d'abeille.

Ainsi dans le cas représenté à la figure 3, l'imbrication est réalisée dans le sens ruban.

Il est également possible que l'ouverture des cellules alvéolaires 11a, 11b permettent une imbrication dans le sens d'expansion, comme représenté à la figure 6.

Selon un mode de réalisation, dans l'étape C, on joint bord-à-bord au moins deux blocs à âmes alvéolaires dont les cellules alvéolaires latérales et de coeur sont de tailles différentes. Selon une variante, un même bloc à âmes alvéolaires peut présenter des cellules alvéolaires latérales et de coeur de tailles différentes.

Ainsi, dans le cas où on joint au moins deux blocs à âmes alvéolaires de tailles différentes, la plus grande longueur I est prise relativement aux cellules alvéolaires latérales et de coeur de plus grande taille présentes dans le bloc A et/ou le bloc B.

Dans le cas où on joint deux blocs comportant des cellules alvéolaires latérales et de coeur de taille sensiblement identique, la plus grande longueur I peut être prise relativement à n'importe quelle cellule alvéolaire latérale ou de coeur.

Selon un mode de réalisation, le procédé de l'invention peut comprendre une étape supplémentaire D dans laquelle on maintient l'imbrication réalisée à l'étape C au moyen d'organes de fixation.

Les organes de fixation sont par exemple des cavaliers ou des agrafes ce qui permet de garantir un bon maintien.

La jonction peut être maintenue par un compactage sous vessie avant cuisson antérieurement à l'application d'une colle usuelle entre les blocs à âmes alvéolaires ainsi joints pour fixer la peau externe.

La structure 2, 102, 202 obtenue par le procédé de l'invention présente une ou plusieurs zones de jonction 13, 113 et 213 qui ne sont pas mises sous contrainte. Ainsi, la mise en oeuvre du procédé est simplifiée comparativement aux modes de réalisation décrits dans l'art antérieur.

En outre, la majorité des parois de jonction 46 ne sont pas en contact ce qui permet d'assurer une bonne résistance à la flexion. En effet, les parois de jonction 46 peuvent chacune se déformer indépendamment des autres parois de jonction. L'entrelacement des blocs à âmes alvéolaires permet le passage des efforts d'une peau externe à l'autre de sorte à éviter une concentration de ces efforts dans l'axe de la jonction.

## Revendications

1. Procédé de fabrication d'une structure à âmes alvéolaires (2 ;102 ;202) apte à être utilisée dans un panneau structurant (1 ;101) pour une nacelle de turboréacteur comprenant au moins un bloc à âmes alvéolaires (A, B) comprenant une partie centrale (5a, 5a', 5b, 5b') comprenant des cellules alvéolaires de coeur (7a, 7a', 7b, 7b') et au moins deux parties latérales (9a, 9a', 9b, 9b') comportant chacune des cellules alvéolaires latérales (11a ,11a' ,11b, 11b'), ce procédé étant **caractérisé en ce qu'**il comprend les étapes suivantes:
A) on forme des parois de jonction (36) sur les cellules alvéolaires latérales (11a ,11a' ,11b, 11b'), les parois de jonction (36) étant aptes à coopérer pour former une zone de jonction (13 ; 113 ; 213),
B) on déplie les parois de jonction (36) ainsi formée, et
C) on joint bord-à-bord les parois ainsi dépliées (46) appartenant à deux parties latérales différentes (9a, 9a', 9b, 9b') de sorte que lesdites parois de jonction (46) s'imbriquent les unes dans les autres pour former une zone de jonction (13 ; 113 ; 213).

2. Procédé selon la revendication précédente, dans lequel la longueur (e) de chaque paroi de jonction (46) est supérieure ou égale à la plus grande longueur (I) des cellules alvéolaires latérales (11a ,11a' ,11b, 11b') et/ou de coeur (7a, 7a', 7b, 7b').

3. Procédé selon la revendication 1 ou 2, dans lequel on joint bord-à-bord des parties latérales (9a, 9b) appartenant à des blocs à âmes alvéolaires (A, B) dont les cellules alvéolaires latérales (11a ,11a' ,11b, 11b')et de coeur (7a, 7a', 7b, 7b') sont de tailles différentes.

4. Procédé selon l'une quelconque des revendications précédentes, dans lequel, dans l'étape A, on ouvre des cellules alvéolaires de bord (33a, 33b) situées sur les bords d'une partie latérale (9a, 9a', 9b, 9b') d'un bloc destinés à être joints et des cellules alvéolaires adjacentes (34a, 34b) aux cellules alvéolaires de bord (33a, 33b) de sorte à former les parois de jonction (46).

5. Procédé selon la revendication précédente, dans lequel on ouvre les cellules alvéolaires de bord (33a, 33b) et adjacentes (34a, 34b) par section d'un côté latéral et/ou d'une paroi d'une cellule alvéolaire (33a, 33b ; 34a, 34b).

6. Procédé selon l'une quelconque des revendications précédentes, comprenant une étape supplémentaire D dans laquelle on maintient l'imbrication réalisée à l'étape C au moyen de cavaliers ou d'agrafes.

7. Panneau structurant (1 ; 101) pour une nacelle entourant un turboréacteur, **caractérisé en ce qu'**il est équipé d'au moins une structure à âmes alvéolaires (2 ; 102 ; 202) obtenue par le procédé conforme à l'une quelconque des revendications précédentes.

8. Panneau (1 ; 101) selon la revendication précédente étant un panneau acoustique dont la ou les structures à âmes alvéolaires (2 ; 102 ; 202) sont revêtues sur l'une de ses faces d'une peau externe (4) imperméable à l'air et sur l'autre de ses faces d'une peau interne (3) perforée perméable à l'air.

9. Panneau selon la revendication 7 ou 8, comportant au moins deux structures à âmes alvéolaires superposées l'unes sur l'autre (102).

10. Nacelle pour moteur d'aéronef, **caractérisée en ce qu'**elle comprend au moins un panneau structurant (1, 101) selon l'une quelconque des revendications 7 à 9.

11. Nacelle selon la revendication précédente, **caractérisée en ce que** le ou les panneaux structurants (1 ; 101) son situés dans la zone d'entrée d'air de ladite nacelle.

## Claims

1. A method for manufacturing a structure with cellular cores (2; 102; 202) that can be used in a structural panel (1; 101) for a turbojet engine nacelle comprising at least one block of cellular cores (A, B) comprising a central portion (5a, 5a', 5b, 5b') comprising core honeycomb cells (7a, 7a', 7b, 7b') and at least two side portions (9a, 9a', 9b, 9b') each including side honeycomb cells (11a, 11a', 11b, 11b'), said method being **characterized in that** it comprises the following steps:
A) forming junction walls (36) on the side honeycomb cells (11a, 11a', 11b, 11b'), the junction walls (36) being able to cooperate to form a junction zone (13; 113; 213),
B) unfolding the junction walls (36) thus formed, and
C) joining the walls thus unfolded (46) belonging to two different side portions (9a, 9a', 9b, 9b') end-to-end such that said junction walls (46) fit together to form a junction area (13; 113; 213).

2. The method according to the preceding claim, wherein the length (e) of each junction wall (46) is greater than or equal to the longest length (I) of the side honeycomb cells (11 a, 11 a', 11 b, 11 b') and/or core honeycomb cells (7a, 7a', 7b, 7b').

3. The method according to claim 1 or 2, wherein side portions (9a, 9b) belonging to blocks of cellular cores (A, B) whereof the side honeycomb cells (11 a, 11 a', 11 b, 11 b') and core honeycomb cells (7a, 7a', 7b, 7b') are of different sizes are joined end-to-end.

4. The method according to any one of the preceding claims, wherein, in step A, edge honeycomb cells (33a, 33b) situated on the edges of the side portion (9a, 9a', 9b, 9b') of a block designed to be joined and adjacent honeycomb cells (34a, 34b) adjacent to the edge honeycomb cells (33a, 33b) are open so as to form the junction walls (46).

5. The method according to the preceding claims, wherein the edge honeycomb cells (33a, 33b) and adjacent honeycomb cells (34a, 34b) are open by section of a lateral side and/or a wall of a honeycomb cell (33a, 33b; 34a, 34b).

6. The method according to any one of the preceding claims, comprising an additional step D in which the fitting done in step C is maintained using clamps or staples.

7. A structural panel (1; 101) for a nacelle surrounding a turbojet engine, **characterized in that** it is equipped with at least one cellular core structure (2; 102; 202) obtained using the method according to any one of the preceding claims.

8. The panel (1; 101) according to the preceding claim being an acoustic panel whereof one surface of the cellular core structure(s) (2; 102; 202) is covered with an outer skin (4) that is impermeable to the air, and the other of its surfaces is covered with a perforated air-permeable inner skin (3).

9. The panel according to claim 7 or 8, including at least two cellular core structures superimposed on one another (102).

10. An aircraft engine nacelle, **characterized in that** it comprises at least one structural panel (1; 101) according to any one of claims 7 to 9.

11. The nacelle according to the preceding claim, **characterized in that** the structural panel(s) (1; 101) are situated in the air intake area of said nacelle.

## Patentansprüche

1. Verfahren zur Herstellung einer Wabenzellen-Struktur (2; 102; 202), die imstande ist, in einer Strukturplatte (1; 101) für eine Turbotriebwerksgondel verwendet zu werden, die mindestens einen Wabenzellen-Block (A, B) umfasst, der einen zentralen Abschnitt (5a, 5a', 5b, 5b') umfasst, der Kernwabenzellen (7a, 7a', 7b, 7b') umfasst und mindestens zwei seitliche Abschnitte (9a, 9a', 9b, 9b'), die jeweils seitliche Wabenzellen(11a, 11a', 11b, 11 b') umfassen, wobei dieses Verfahren **dadurch gekennzeichnet ist, dass** es die folgenden Schritte umfasst:
A) Formen von Verbindungswänden (36) auf den seitlichen Wabenzellen (11a, 11a', 11b, 11b'), wobei die Verbindungswände (36) imstande sind zusammenzuarbeiten, um eine Verbindungszone (13; 113; 213) zu bilden,
B) Entfalten der derart geformten Verbindungswände (36) und
C) Rand-an-Rand-Verbindung der derart entfalteten Wände (46), die zu zwei verschiedenen Seitenabschnitten (9a, 9a', 9b, 9b') gehören, derart, dass sich die Verbindungswände (46) ineinander schieben, um eine Verbindungszone (13; 113; 213) zu bilden.

2. Verfahren nach vorangehendem Anspruch, wobei die Länge (e) jeder Verbindungswand (46) größer oder gleich der größten Länge (I) der seitlichen (11a, 11a', 11 b, 11b') und/oder der Kernwabenzellen (7a, 7a', 7b, 7b') ist.

3. Verfahren nach Anspruch 1 oder 2, wobei seitliche Abschnitte (9a, 9b), die zu Wabenzellen-Blöcken (A, B) gehören, deren seitliche (11a, 11a', 11 b, 11 b') und Kernwabenzellen (7a, 7a', 7b, 7b') unterschiedlicher Größe sind, Rand an Rand verbunden werden.

4. Verfahren nach einem der vorangehenden Ansprüche, wobei in Schritt A Randwabenzellen (33a, 33b), die sich an den Rändern eines seitlichen Abschnitts (9a, 9a', 9b, 9b') eines Blocks befinden, die dazu bestimmt sind, verbunden zu sein, und Wabenzellen (34a, 34b), die den Randwabenzellen (33a, 33b) benachbart sind, geöffnet werden, um Verbindungswände (46) zu bilden.

5. Verfahren nach vorangehendem Anspruch, wobei die Rand- (33a, 33b) und die benachbarten Wabenzellen (34a, 34b) durch Durchtrennen einer seitliche Seite und/oder einer Wand einer Wabenzelle (33a, 33b; 34a, 34b) geöffnet werden.

6. Verfahren nach einem der vorangehenden Ansprüche, das einen zusätzlichen Schritt D umfasst, bei dem die bei Schritt C mittels Reitern oder Klammern durchgeführte Verschachtelung gehalten wird.

7. Strukturplatte (1; 101) für eine Gondel, die ein Turbotriebwerk umgibt, **dadurch gekennzeichnet, dass** sie mit mindestens einer Wabenzellen-Struktur (2; 102; 202) ausgestattet ist, die gemäß dem Verfahren nach einem der vorangehenden Ansprüche hergestellt wird.

8. Platte (1; 101) nach vorangehendem Anspruch, die eine Akustikplatte ist, deren Wabenzellen-Struktur(en) (2; 102; 202) auf einer ihrer Seiten mit einer luftundurchlässigen Haut (4) und auf der anderen ihrer Seiten mit einer inneren perforierten luftdurchlässigen Haut (3) verkleidet sind.

9. Platte nach Anspruch 7 oder 8, die mindestens zwei übereinander angeordnete Wabenzellen-Strukturen (102) aufweist.

10. Flugzeugmotor-Triebwerksgondel, **dadurch gekennzeichnet, dass** sie mindestens eine Strukturplatte (1, 101) nach einem der Ansprüche 7 bis 9 umfasst.

11. Gondel nach vorangehendem Anspruch, **dadurch gekennzeichnet, dass** sich die Strukturplatte(n) (1; 100) im Lufteingangsbereich der Gondel befinden.
